# EUROPEAN PATENT SPECIFICATION

(11) **EP 3 372 963 B1**
(45) Date of publication and mention of the grant of the patent: **22.09.2021**
(21) Application number: 17159278.5
(22) Date of filing: 05.03.2017
(51) Int. Cl.: G01G 23/01

(54) **WEIGHING CELL MONITORING**
WÄGEZELLENÜBERWACHUNG
SURVEILLANCE DE CELLULE DE PESAGE

(43) Date of publication of application: 12.09.2018
(73) Proprietor: Bizerba SE & Co. KG, 72336 Balingen (DE)
(72) Inventor: EPPLER, Heinz, 72469 Messstetten (DE)
(74) Representative: Huber, Meik

(56) References cited:
- US-A1- 2002 066 602
- US-A1- 2014 163 909

## Description

### FIELD OF THE INVENTION

The present invention relates to a weighing scale comprising a weighing cell, a weighing scale board and/or a weighing cell board and a method for operating a weighing scale.

### BACKGROUND OF THE INVENTION

The section introduces aspects that may be helpful in facilitating a better understanding of the invention. Accordingly, the statements of this section are to be read in this light and are not to be understood as admission about what is in the prior art.

Weighing scales for use in, e. g. retail shops, are comprising weighing cells which need to be calibrated during use and during at least a startup phase. During calibration their zero point is reset. Conditions and boundaries in which resets are allowed by official authorities are known in the art, e. g. published by the ORGANISATION INTERNATIONALE DE METROLOGIE LEGALE (OIML), R 76, Non-automatic weighing instruments. EP2037237A2 discloses a weigh measuring apparatus with zero-point resets in dependence of a previous zero-point reset.
US2002/0066602 discloses a load cell diagnostics and failure prediction weighing apparatus for analog load cell systems, including analysis unit associated with each load cell, for analyzing diagnostic events and storing resultant information.

On the other hand, it is known in the art that weighing scales need to be serviced on a regular basis to ensure a proper functionality. In fact, if a weighing cell fails, the weighing scale is out of order or at least is only allowed as uncalibrated weighing scale until a service was performed and the weighing cell is replaced.

### SUMMARY OF THE INVENTION

It is an object of the invention to reduce the out of order times of weighing scales due to the unpredictable failure of the weighing cell.

The present invention concerns a weighing scale which comprises a base unit and a weighing cell arranged inside the base unit. The weighing cell comprises a force application section mechanically connected to a load receiver and a ground section mechanically connected to the base unit. The weighing cell further comprises at least one sensor for measuring a force which is applied to the force application section. In one embodiment, the sensor is built up of one or more strain gauge sensors which are applied on, in or below the weighing cell in an area between the force application section and the ground section. The weighing cell comprises a weighing cell board for generating a weight value from the measured force. The weighing cell board is electrically connected to a weighing scale board for operating and controlling the weighing scale. The weighing cell board comprises a first storage for storing the number of zero point adjustments that are bigger than a first zero point adjustment threshold and a second storage for storing the biggest zero point adjustment value. By way of example only and for a better understanding of the invention, a first zero point adjustment threshold for a weighing cell with a maximum load of 18 kg may be 50 g or 100 g. A zero point adjustment value which is bigger than this threshold and occurs regularly and multiple times is considered as sign of a slow wearing down process of the weighing cell. In one embodiment, the first storage and the second storage may only be erased or set to zero by qualified service staff with dedicated means. In one embodiment, the first storage and/or the second storage are arranged on the weighing scale board. The weighing cell board comprises a calculator for calculating the zero point adjustment value at a startup of the weighing scale with an unloaded load receiver, preferably at each startup of the weighing scale with an unloaded load receiver, by force measurement with an unloaded load receiver. If startup of the weighing scale with a load on the load receiver is performed, which should in fact not be the case when properly used, this startups must not be considered. The calculator is further for comparing the measured force to a previous startup zero point force stored in a storage means of the weighing cell board. This means, each startup zero point force measurement is compared to the pervious startup zero point force measurement. The difference between these two values is the zero point adjustment value. The calculator is further for incrementing the first storage by one if the absolute value of the zero point adjustment value is bigger than the first zero point adjustment threshold. According to one embodiment, the calculator is further for storing the absolute value of the calculated zero point adjustment value in the second storage, if the absolute value of the calculated zero point adjustment value is bigger than the zero point adjustment value already stored in the second storage. According to one embodiment, at least parts of the calculation steps are performed by a calculator of the weighing scale board. If the calculator is located in the weighing cell board, it is advantageous because it cannot be manipulated by from outside, as the weighing cell board has protected storage and data processing areas. The weighing scale according to the invention has the advantage that a measure for the wearing down process of the weighing cell and the condition of the weighing cell can be monitored at an early point of their mechanical wear and not only when a serious malfunction has already occurred. According to the invention, the status and the quality of the weighing cell are predictable and are monitored. Using the zero point value at startup is advantageous, as this value represents a memory function of damages and stress the weighing cell has been exposed to. The zero point, if drifted due to wear down effects of the weighing cell keeps the offset and this offset can be examined later on. On the other hand, also wear down effects which cannot be observed directly, e. g. because they occur during power off time, can be detected and are considered this way.

According to the invention, the calculator is further for calculation a zero point deviation value by comparing the measured force at startup to a first calibration zero point force stored in a storage means of the weighing cell board. The first calibration zero point force is generated during weighing scale production, when at the end of the production the weighing scale is calibrated. This value considers also the weight of the empty load receiver. The weighing cell board further comprises a third storage for storing the absolute value of the zero point deviation value. If the absolute value of the calculated zero point deviation value is bigger than the zero point deviation value already stored in the third storage, the current zero point deviation value is stored in the third storage. According to one embodiment, the calculator and/or the third storage are arranged in the weighing scale board.

According to one embodiment, the weighing scale board and/or the weighing cell board further comprises a fourth storage for storing the time of each zero point adjustment and the corresponding zero point adjustment value, if the zero point adjustment value is bigger than the first zero point adjustment threshold. This has the advantage that a history of the zero point adjustments above the first zero point adjustment threshold can be monitored and evaluated. If storage capacity of the weighing cell board is limited, it is advantageous to store this history in a fourth storage on the weighing scale board.

According to one embodiment, the weighing scale board comprises a weighing cell lifetime prediction unit for generating a weighing cell lifetime index. The weighing cell lifetime index is generated by using the number of zero point adjustments that are bigger than the first zero point adjustment threshold, which is stored in the first storage, as an input. In one embodiment, the weighing cell lifetime index is generated by using, solely or in addition, the biggest zero point adjustment value, which is stored in the second storage, as a further input. In one embodiment, the weighing cell lifetime index is generated by using, solely or in addition, the time between two zero point adjustments that are bigger than a first zero point adjustment threshold, which is stored in the third storage, as a further input. In one embodiment, the weighing cell lifetime index is generated by using, solely or in addition, the zero point deviation value, which is stored in the fourth storage, as a further input. The generated weighing cell lifetime index is compared to a first weighing cell lifetime threshold. If the weighing cell lifetime index is below the first weighing cell lifetime threshold, the weighing cell lifetime is coming to an end. This means, the weighing cell lifetime prediction unit determines that the weighing cell is worn down and the end of its lifetime is close. In one embodiment, the weighing scale indicates to the user to call the service for the weighing scale. In one embodiment, the weighting scale requests, e. g. via email or online, a service by the service provider. In one embodiment, the weighing cell lifetime prediction unit compares the weighing cell lifetime index to a second weighing cell lifetime threshold. If the weighing cell lifetime index is below the second weighing cell lifetime threshold, the weighing cell lifetime is over. According to one embodiment, in this case, the shop scale stops working in a calibrated mode and informs the user that calibrated mode is only possible after the weighing scale is serviced and/or the weighing cell is replaced. According to one embodiment, the weighing cell lifetime prediction unit is arranged on the weighing cell board. The use of a weighing cell lifetime prediction unit is advantageous, as the lifetime of the weighing cell can be monitored and surprisingly malfunction of the weighing scale is omitted.

According to one embodiment, the weighing scale comprises an input for receiving a zero point resetting instruction during operation of the weighing scale. The input signal received is e. g. triggered by a user input on an input device. The calculator is further for calculating a zero point adjustment value if the zero point resetting instruction is received. The zero point adjustment value is calculated by comparing the measured force to the zero point force value. The current zero point force value is to be understood to be a value generated by zero-setting either at startup or due to a user request or the like, as described above, and not by zero-tracking, which is a permanent and automatic adaption of a zero value during operation. The calculator is further for incrementing a fifth storage if the zero point adjustment value is bigger than a second zero point adjustment threshold. According to one embodiment, the calculator is for storing the absolute value of the calculated zero point adjustment value in a sixth storage if the absolute value of the calculated zero point adjustment value is bigger than the zero point adjustment value already stored in the sixth storage. Thus, with this information, the weighing cell condition is also monitored during operation, if a zero setting is requested.

According to one embodiment, the weighing cell board comprises a comparator for comparing a measured force to a static overload force threshold and for comparing the duration during which the measured force is higher than the static overload force threshold with a static overload time threshold. If the measured force is bigger than the static overload force threshold for a longer duration than the static overload time threshold, the number stored in a seventh storage is increased by one. In other words, the seventh storage is for storing the number of times the measured force is bigger than the static overload force threshold for a duration longer than the static overload time threshold. By way of example only, the static overload force threshold is 150 % up to 200 % of the weight range of the weighing cell and the static overload time threshold is one or a few seconds. According to one embodiment, the weighing cell board comprises an eighth storage for storing the highest measured static overload force. According to one embodiment, the comparator and/or the seventh storage and/or the eighth storage are arranged on the weighing scale board.

According to one embodiment, the weighing cell board comprises a comparator for comparing a measured force to a dynamic overload force threshold and a ninth storage for storing the number of times the measured force is bigger than the dynamic overload force threshold. According to one embodiment, the weighing cell board further comprises a tenth storage for storing the highest measured dynamic overload force. According to one embodiment, the comparator and/or the ninth storage and/or the tenth storage are arranged on the weighing scale board. By way of example only, the dynamic overload force threshold is 200 % of the weight range of the weighing cell or higher. Such a force is caused by an accidental hit on the load receiver and lasts less than one second. It is ensured that each hit is counted only once and not multiple times due to oscillations.

According to one embodiment, the weighing cell lifetime prediction unit includes the values of the fifth storage and/or sixth storage and/or seventh storage and/or eighth storage and/or ninth storage and/or tenth storage when generating the weighing cell lifetime index.

According to one embodiment, the weighing cell board comprises an acceleration sensor. Further, the weighing cell board comprises an eleventh storage for storing the number of times the measured acceleration is above an acceleration threshold. If the measured acceleration is bigger than the acceleration threshold, the eleventh storage is incremented by one. According to one embodiment, the acceleration threshold is the like, that at least a drop, e. g. a free fall of the weighing scale, is identified. That is, the acceleration sensor detects an increasing acceleration while the weighing scale falls and a short very high acceleration in the opposite direction when the weighing scale crashes onto the floor. According to one embodiment, the weighing cell board further comprises a twelfth storage for storing the highest measured acceleration. According to one embodiment, the acceleration sensor and/or the eleventh storage and/or the twelfth storage are arranged on the weighing scale board.

According to one embodiment, the weighing cell board comprises a temperature sensor. According to one embodiment, the weighing cell board comprises a thirteenth storage for storing the number of times the measured temperature is above a temperature threshold. If the measured temperature is bigger than the temperature threshold, the value stored in the thirteenth storage is incremented by one. According to one embodiment, the weighing cell board comprises an fourteenth storage for storing the highest measured temperature. According to one embodiment, the temperature sensor and/or the thirteenth storage and/or the fourteenth storage are arranged on the weighing scale board.

According to one embodiment, the weighing cell board comprises a supply voltage measurement device and a fifteenth storage for storing the number of times the measured supply voltage is below a supply voltage threshold. If the measured supply voltage is below a supply voltage threshold, the value stored in the fifteenth storage is incremented by one.

According to one embodiment, the weighing cell lifetime prediction unit includes the values of the eleventh storage and/or twelfth storage and/or thirteenth storage and/or fourteenth storage and/or fifteenth storage for generating the weighing cell lifetime index.

According to one embodiment, the weighing scale board and/or the weighing cell board comprise a battery for providing supply voltage to at least one of the force measurement sensor, the acceleration sensor, the temperature sensor and the storage. This ensures that the functionality of calculating, comparing and/or storing is provided during times the weighing scale is unplugged, e. g. during times the weighing scale is carried to another place or is installed. During this time, a lot of critical events for the weighing cell may happen, e. g. drop of the weighing scale, which could affect the proper operation of the weighing cell.

According to one embodiment, the weighing cell board and/or the weighing scale board comprises a storage for storing the number of calibrations by performing a calibration method by the weighing scale and/or a storage for storing the number of registrations, that is the number of weighings during lifetime of the weighing cell. According to one embodiment, the weighing cell lifetime prediction unit includes this information for generating the weighing cell lifetime index.

The present invention further concerns a method for operating a weighing scale. The weighing scale comprises a base unit and a weighing cell arranged inside the base unit. The weighing cell comprises a force application section mechanically connected to a load receiver and a ground section mechanically connected to the base unit. The weighing cell further comprising at least one sensor for measuring a force which is applied to the force application section. In one embodiment, the sensor is built up of one or more strain gauge sensors which are applied on, in or below the weighing cell in an area between the force application section and the ground section. The weighing cell further comprises a weighing cell board for generating a weight value from the measured force. The weighing cell board is electrically connected to a weighing scale board. The method comprises a step of performing, during a startup, a force measurement of an unloaded load receiver. The method comprises a step of calculating by a calculator a zero point adjustment value by comparing the measured force to a pervious startup zero point force. The method comprises a step of incrementing the number of zero point adjustments stored in a first storage by one if the absolute value of the zero point adjustment value is bigger than a first zero point adjustment threshold. According to one embodiment, the method comprises the step of storing the absolute value of the calculated zero point adjustment value in a second storage if the absolute value of the zero point adjustment value is bigger than the zero point adjustment value stored in the second storage.

According to one embodiment, a step of calculating a zero point deviation value by comparing the measured force to a first calibration zero point force is performed. If the absolute value of the calculated zero point deviation value is bigger than the current zero point deviation value stored in a third storage, the absolute value of the zero point deviation value is stored in the third storage.

According to one embodiment, the method further comprises the step of performing a weighing cell lifetime prediction by generating a weighing cell lifetime index based on the values stored in the first, second and/or third storage. If the weighing cell lifetime index is below a first weighing cell lifetime threshold, a message that a service is needed is displayed on a user display of the weighing scale. This is the case when the lifetime of the weighing cell is coming to an end. In one embodiment, the weighting scale requests, e. g. via email or online, a service from a service provider. According to one embodiment, if the weighing cell lifetime index is below a second weighing cell lifetime threshold, a message is displayed on a user display of the weighing scale that operation of the weighing scale is stopped and the weighing scale or the weighing cell itself stops operation of the weighing cell.

According to one embodiment, if a measured force is higher than a static overload force threshold and the measured force higher than the static overload force threshold is present for a duration longer than a static overload time threshold, a static overload index is incremented. This means, the number in a seventh storage storing the static overload index is increased by one. According to one embodiment, the highest measured force which is present for a duration longer than a static overload time threshold is stored in a eighth storage. According to one embodiment, if a measured force is higher than a dynamic overload force threshold, a dynamic overload index is incremented. This means, the number in a ninth storage storing the dynamic overload index is increased by one. According to one embodiment, the highest dynamic force measured which is higher than a dynamic overload force threshold is stored in a tenth storage. According to one embodiment, if an accelerating measured by an acceleration sensor is higher than an acceleration threshold, an acceleration index is incremented. This means, the number in an eleventh storage storing the acceleration index is increased by one. According to one embodiment, the highest acceleration measured which is higher than an acceleration threshold is stored in a twelfth storage. According to one embodiment, if a temperature measured by a temperature sensor is higher than a temperature threshold, a temperature index is incremented. This means, the number in a thirteenth storage storing the temperature index is increased by one. According to one embodiment, if the highest temperature measured by the temperature sensor which higher than a temperature threshold is stored in a fourteenth storage. According to one embodiment, if the supply voltage of the weighing cell board is below a supply voltage threshold, a supply voltage index is incremented. This means, the number in a fifteenth storage storing the supply voltage index is increased by one. According to one embodiment, the weighing cell lifetime prediction is performed by generating a weighing cell lifetime index that is further based on at least one of the static overload index, the dynamic overload index, the acceleration index, the temperature index and the supply voltage index. In one embodiment, the first storage to the fifteenth storage as well as the storages for the threshold values may only be erased or set to zero or to different values by qualified service staff with dedicated means.

### BRIEF DESCRIPTION OF THE DRAWINGS

Some embodiments of apparatus and methods in accordance with embodiments of the present invention are now described, by way of examples only, and which reference to the accompanying drawings, in which:
- Fig. 1: schematically depicts a weighing scale according to the invention
- Fig. 2: exemplarily depicts a diagram of calculated zero points of a weighing cell and corresponding thresholds
- Fig. 3: schematically depicts method according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects and embodiments of the invention, as well as specific examples thereof, are intended to encompass equivalents thereof.

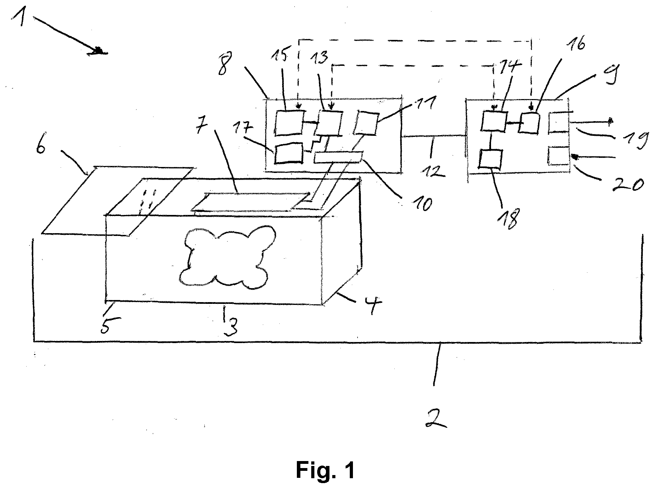

Fig. 1 schematically depicts a weighing scale 1. The weighing scale 1 comprises a base unit 2 that carries weighing cell 3. The weighing cell 3 comprises force application section 5, which is mechanically connected to a load receiver 6. The weighing cell 3 further comprises the ground section 4, which is mechanically connected to the base unit 2. Between the force application section 5 and the ground section 4, a sensor for measuring a force which is applied to the force application section 5 is applied. The sensor 7 is a strain gauge sensor. The sensor 7 measures the bending of this area and sends the signal to an analog-to-digital converter 10 of the weighing cell board 8. The weighing cell board 8 is an electronic board further comprising electronic devices 11 to generate a weight value from the force signals of the analogue-to-digital converter 10. The sensor 7 further comprises a processor 13, a storage 15 and threshold values storage 17. Other electronic devices present on weighing cell board 8 are known by a person skilled in the art and are not depicted. The weighing cell board 8 is electrically connected 12 to a weighing scale board 9. The weighing scale board 9 may comprise a processor 14, a storage 16 and a threshold value storage 18. The processors 13, 14, the storages 15, 16 and the threshold value storages 17, 18 are depicted on the weighing cell board 8 as well as on the weighing scale broad 9. Some storages 15, 16, 17, 18 are protected and can only by altered by qualified service staff to omit manipulation. The weighing scale board 9 further comprises an output 19 for providing information to the outside, e.g. to a display or to the Internet, and further comprises an input 20 for receiving instructions or information, e.g. from a touchscreen or an input device. Other electronic devices present on weighing scale board 9 are known by a person skilled in the art and are not depicted.

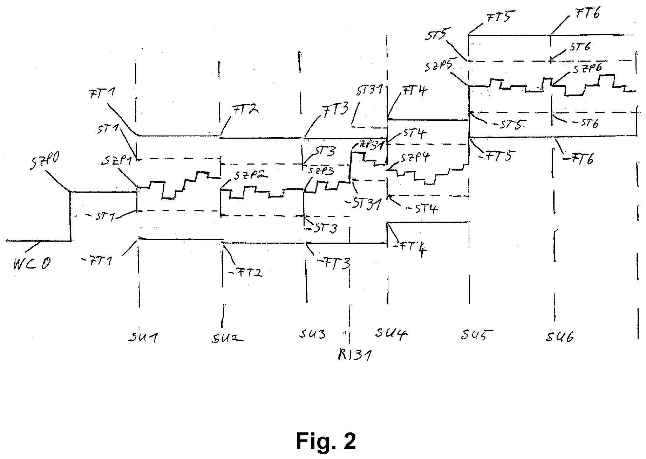

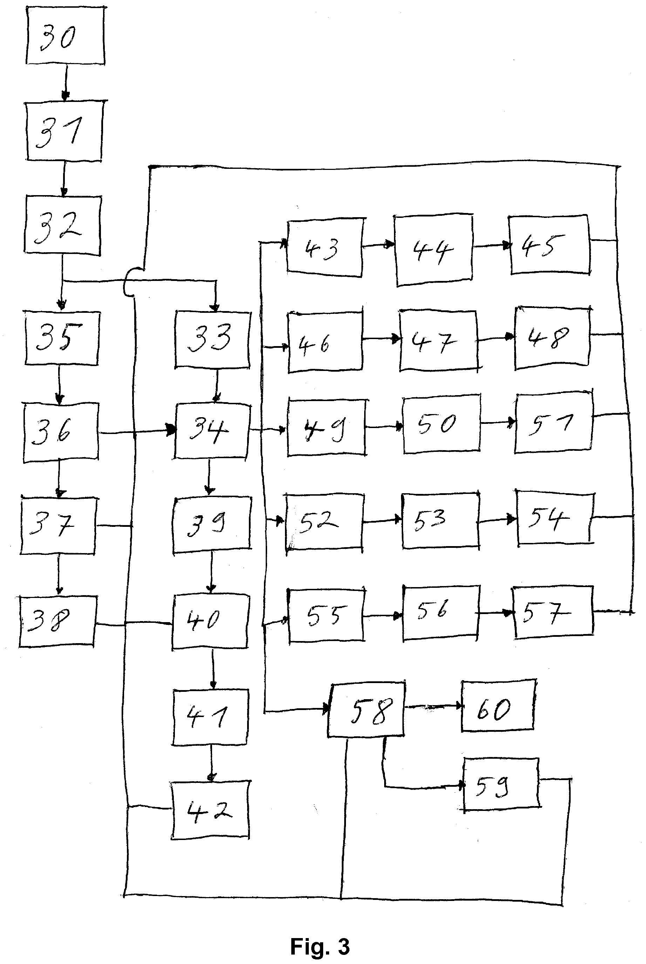

Fig. 2 schematically depicts the zero point of a weighing cell 3 with regard to the time of its operation. The graph shows the zero point forces which are measured on the y axis. The x axis represents the operation time. At the points SU1, SU2, SU3, SU4, SU5 and SU6, a startup of the weighing scale 1 is performed. The zero point force WC0 of the weighing cell 3 itself without the weight of the load receiver 6 is shown on the left. After production of the weighing scale 1, the first calibration zero point force SZP0 is shown. This is the force which is measured by the weighing cell 3 when the weighing scale 1 is produced and is calibrated. In other words, this is the initial zero point of the weighing scale 1. At time SU1, the first startup is performed. The weighing scale 1 measures the corresponding zero point force SZP1 with an unloaded load receiver 6. According to the invention, this is the measured zero point force. The startup zero point force SZP1 for the weighing scale 1 is set to this value for further operation until there is a new startup zero point SZP2 setting. Around the measured startup zero point force SZP1, two bands are defined. The first band -FT1...SZP1...+FT1 has a distance of the first zero point adjustment threshold around the startup zero point force SZP1. The second band -ST1...SZP1...+ST1 has a distance of the second zero point adjustment threshold around the startup zero point force SZP1. It is understood that in this example the bands are defined symmetrically around the zero point but the invention is not limited to a symmetric band around the startup zero point. According to the method which is described with regard to Fig. 3 below, it is understood that when measured force values are compared to the first zero point adjustment threshold or to the second zero point adjustment threshold, it is checked if the measured force values are within the described bands -FT1...SZP1...+FT1 or -ST1...SZP1...+ST1. Of course, the description for the bands is also applicable to all following startups SU2, SU3, SU4, SU5, SU6. During the time beweent SU1 and SU2, it can be seen in Fig. 2 that the zero point is adapted from time to time. This is known in the art as zero tracking. This represents the weighing scale 1 defining new zero point forces during operation without a user instruction input manually for a new zero point determination. At the end of the interval between SU1 and SU2, the weighing scale has a zero point which is usually different from the zero point after startup SZP1. At the end of this interval, the weighing scale 1 is shut down. At the next startup SU2, a new zero point force SZP2 is measured and a new zero point for the weighing scale 1 is defined. The new startup zero point force SZP2 in practice can be different from the zero point which was available in the weighing scale 1 at shut down. Consequently, at startup SU2 new first and second zero point adjustment value bands - FT2...SZP2...+FT2 or -ST2...SZP2...+ST2 are calculated. This is repeated after each startup. In Fig. 2, after the third startup SU3, the startup zero point force SZP3 is measured and the first and second zero point adjustment value bands -FT3...SZP3...+FT3 or -ST3...SZP3...+ST3 are defined accordingly. At point RI31 after this startup SU3, a resetting instruction is received during operation, e. g. via a touchscreen of the weighing scale 1. This is a manual request for setting a new zero point force. Consequently, a force measurement with an unloaded load receiver 6 is performed by the weighing cell 3 and a new zero point force ZP31 is determined. In this case, this is not a startup zero point force, as the zero point generation was requested manually during operation. The new zero point force ZP31 is farer away from the startup zero point force SZP3 than the second zero point adjustment threshold. In other words, the new zero point ZP31 is outside the band -ST3...SZP3...+ST3. Therefore, the indicator in the fifth storage is enhanced by one. Also, a new band -ST31...ZP31...+ST31 around the new zero point force ZP31 with the distance of the second zero point adjustment threshold is defined. As this is not a startup zero point force which was measured, the band -FT3...SZP3...+FT3 which was calculated with the first zero point adjustment threshold is unaffected. In the example of Fig. 2, at point SU5, a further startup of the weighing scale 1 is performed. A force measurement with an unloaded load receiver 6 is performed and a startup zero point force SZP5 is measured. The measured startup zero point force SZP5 is compared to the previous startup zero point force SZP4 and the difference of the two forces is bigger than the first zero point adjustment value. In other words, the measured startup zero point force SZP5 is outside the band -FT4...SZP4...+FT4 which was defined at the last startup SU4. Therefore, the value stored in the first storage is incremented by one and the new zero point force SZP5 is defined as the measured startup zero point force SZP5. If the adjustment value compared to the last startup zero point measurement SZP4 is bigger than the one stored in the second storage, the new zero point adjustment value is stored in the second storage. A zero point adjustment value is the difference between the last startup zero point force SZP4 and the current startup zero point force SZP5. Further, a zero point deviation value is calculated, which is the difference of the current startup zero point force SZP5 and the first calibration zero point force SZP0. If this value is bigger than the value stored in the third storage, the value is stored as new zero point deviation value in the third storage. According to the OIML R 76 standard, the difference between the first calibration zero point force SZP0 and a newly defined zero point force, the zero point deviation in the language of this description, is allowed to be up to 20 % of the weighing range of the scale. For a 18 kg weighing cell 3, the allowed zero point deviation would be 3.6 kg, e. g. from -300 g to 3300 g. Usually, this range is not used completely. Zero point deviations of retail scales are significant lower. Also if only described with this startup SU5, the zero point deviation value is calculated at every startup and the corresponding value is stored in the third storage if the above condition is fulfilled. After setting a new startup zero point force SZP5, also the corresponding bands -FT5...SZP5...+FT5 and -ST5...SZP5...+ST5 are calculated as described above.

Fig. 3 depicts a schematical view on the steps performed by the weighing scale 1 when the invention is facilitated. Steps 30 to 38 depict the case of starting up the weighing scale 1. In step 30 the weighing scale 1 is switched on. During the startup phase, in step 31, a force measurement with an unloaded load receiver 6 is performed. This force measurement generates the startup zero point value SZP. The result of the force measurement is compared in step 32 to the previous startup zero point force SZP which is stored in the storage means of the weighing cell board 8. If the difference between the measured force and the previous startup zero point force is smaller than the first zero point adjustment threshold, the measured force value is set to the new zero point force leading to new first zero point adjustment threshold boundaries FT1, FT2, ... and to new second zero point adjustment threshold boundaries ST1, ST2, ... in step 33. Then, the method moves on to step 34 and startup is ended. If the difference between the measured force and the previous startup zero point force is bigger than the first zero point adjustment threshold, in step 35 the number stored in the first storage is incremented by one and the measured force value is set to the new zero point force leading to new first zero point adjustment threshold boundaries FT1, FT2, ... and to new second zero point adjustment threshold boundaries ST1, ST2, .... Further, in step 36 it is checked if the calculated zero point adjustment value is higher than the value stored in the second storage. If not, the method proceeds with step 34 and startup is ended. If so, the new zero point adjustment value is stored in the second storage and the method proceeds with step 37. In step 37, the measured force is compared to a first calibration zero point force stored in the weighing cell board and/or weighing scale board and the difference of the two values is compared to a zero point deviation value which is stored in a third storage. It the zero point deviation value is bigger than the absolute value of the calculated difference, the startup ends in step 34. If the absolute value of the calculated value is bigger than the zero point deviation value stored in the third storage, the absolute value of the calculated difference is store in the third storage in step 38 and startup is ended in step 34. Steps 39 to 42 depict the case of zero point resetting if a zero point resetting instruction is received at an input of the weighing scale 1. In step 39, a zero point resetting instruction is received by the weighing scale board 9 via an input device 20 of the weighing scale 1, e. g. a touchscreen. A zero point force measurement is performed by measuring the applied force at the weighing cell 1 with an unloaded load receiver 6 and a new zero point ZP31 is set. The measured force is compared to the current zero point force and a zero point adjustment value is calculated. In step 40, it is checked if the absolute value of the zero point adjustment value is bigger than the second zero point adjustment threshold. If not, the method proceeds in step 34. If the absolute value of the zero point adjustment value is bigger than the second zero point adjustment threshold, the method proceeds with step 41. In step 41, a number stored in a fifth storage is incremented by one. The number in the fifth storage is an index for zero point resets during operation which are outside of the band of the second zero point adjustment threshold. In step 42, it is checked if the absolute value of the zero point adjustment value is bigger than the value stored in a sixth storage. If so, the absolute value of the calculated zero point adjustment value is stored in the sixth storage and the method proceeds with step 34. If not, the method proceeds with step 34 directly. Steps 43 to 45 depict the case when a static overload occurs. In step 43, the measured force is compared to a static overload force threshold. If the measured force is higher than the static overload force threshold, it is also checked in step 43 if the duration during which the force higher than the static overload force threshold is applied is higher than a static overload time threshold. If so, in step 44, a seventh storage for storing the number of static overloads that have occurred is increased by one. Further, in step 45, it is checked if the measured force is higher than the value that is stored in an eighth storage, representing the highest static overload value that has occurred. If this is the case, the measured force is stored in the eighth storage and the method proceeds with step 34. Steps 46 to 48 depict the case when a dynamic overload occurs. In step 46, the measured force is compared to a dynamic overload force threshold. If the measured force is higher than the dynamic overload force threshold, in step 47, a ninth storage for storing the number of dynamic overloads that have occurred is increased by one. Further, in step 48, it is checked if the measured force is higher than the value that is stored in a tenth storage, representing the highest dynamic overload value that has occurred. If this is the case, the measured force is stored in the tenth storage and the method proceeds with step 34. Steps 49 to 51 depict the case when a high acceleration occurs. In step 49, the acceleration measured by an acceleration sensor is compared to an acceleration threshold. If the measured acceleration is higher than the acceleration threshold, in step 50, an eleventh storage for storing the number of accelerations higher than the acceleration threshold that have occurred is increased by one. Further, in step 51, it is checked if the measured acceleration is higher than the value that is stored in a twelfth storage, representing the highest acceleration value that has occurred so far. If this is the case, the measured acceleration is stored in the twelfth storage and the method proceeds with step 34. Steps 52 to 54 depict the case when a high temperature occurs. In step 52, the temperature measured by a temperature sensor is compared to a temperature threshold. If the measured temperature is higher than the temperature threshold, in step 53, a thirteenth storage for storing the number of temperature measurements higher than the temperature threshold that have occurred is increased by one. Further, in step 54, it is checked if the measured temperature is higher than the value that is stored in a fourteenth storage, representing the highest temperature value that has occurred so far. If this is the case, the measured temperature is stored in the fourteenth storage and the method proceeds with step 34. Steps 55 to 56 depict the case when a low supply voltage occurs. In step 55, the supply voltage available on the weighing cell board 8 is compared to a supply voltage threshold. If the supply voltage is lower than the supply voltage threshold, in step 56, a fifteenth storage for storing the number of low supply voltages situations is increased by one. Then, the method proceeds with step 34. In step 58, a lifetime prediction is performed. The lifetime prediction is either performed by the processor 13 or part of the processor 13 of the weighing cell board 8 or by the processor 14 or part of the processor 14 of the weighing scale board 9 or by both, the processor 13 and the processor 14 at least in part. The lifetime prediction is based on at least one of the values stored in the first to the fifteenth storages. In one embodiment, the most critical value for lifetime prediction of the weighing cell 3 is the number of zero point adjustments occurred at startup which is stored in the first storage. In other words, most critical for lifetime prediction of the weighing cell 3 in this embodiment is the number of times the zero point force at startup is farer away from the zero point force defined at the last startup than the first zero point adjustment threshold. In other words, the zero point adjustment value at startup is higher than the first zero point adjustment threshold. This indicates that the weighing cell 3 drifted away during one period of operation, e. g. one day. If this occurs repeatedly and very often, it indicates that the lifetime of the weighing cell is coming to an end. In one embodiment, the second most important parameter is the zero point deviation value stored in the third storage. The zero point deviation value represents the highest difference occurred so far at startup for a zero point force compared to the first calibration zero point force. The first calibration zero point SZP0 is defined during production of the weighing scale 1 and represents the initial status weighing scale 1 and the weighing cell 3, respectively. The zero point deviation value indicates how far the weighing cell 3 has drifted since production without indication if the drift occurred at once or step by step. Insofar, according to one embodiment, the most reliable basis for lifetime prediction is the use of a combination of the zero point deviation value stored in the third storage and the number of zero point adjustment values bigger than the first zero point adjustment threshold stored in the first storage. In one embodiment, at least one value stored in the other storages is used to enhance lifetime prediction of the weighing cell. After lifetime of the weighing cell 3 is predicted in step 58, also in step 58 the predicted lifetime is compared to a first weighing cell lifetime threshold and to a second weighing cell lifetime threshold. If none of the two thresholds are met, the method proceeds with step 34. If the lifetime prediction is lower than the second weighing cell lifetime threshold, this means the lifetime of the weighing cell 3 is over and the method proceeds to step 60. In step 60, the weighing scale board 9 outputs 20 that the lifetime of the weighing cell 3 is over and this message is either presented on a display of the weighing scale 1 or sent via email or internet to a service provider for the weighing cell 3. The weighing scale 1 then stops operation until the weighing cell 3 is replaced or operates in a non calibrated mode, so to say non official mode. If the lifetime prediction in step 58 is higher than the second weighing cell lifetime threshold and lower than a first weighing cell lifetime threshold, this means that the lifetime of the weighing cell 3 is coming to an end. In this case, in step 59, the weighing scale board 9 outputs 20 that the lifetime of the weighing cell 3 comes to an end and also the potential remaining lifetime of the weighing cell 3 and this message is either presented on a display of the weighing scale 1 or sent via email or internet to a service provider for the weighing cell 3. This should indicate that a service is necessary for the weighing cell 3 and the weighing cell 3 needs to be checked or replaced, but in this status after step 59, the method proceeds with step 34 and operation of the weighing scale 1 also in a calibrated mode is still possible. According to one embodiment, the indication that the weighing cell 3 needs to be replaced is shown on the weighing scale display permanently until the weighing cell 3 is replaced. If the conditions in steps 43, 46, 49, 52, 55 and 58 are not met, the method proceeds with step 34, which is not reflected in Fig. 3 for sake of simplicity. Insofar these steps are to be understood as checks for certain conditions, which occur permanently or in a specific order, preferably in parallel. In one embodiment, steps 39 to 42, 43 to 45, 46 to 48, 49 to 51, 52 to 54, 55 to 56, 58 to 60 are performed in parallel partly or in total in either one of the processors 13, 14 of the weighing cell board 8 or weighing scale board 9 or both.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A weighing scale (1), comprising a base unit (2), a weighing cell (3) arranged inside the base unit (2), the weighing cell (3) comprising a force application section (5) mechanically connected to a load receiver (6) and a ground section (4) mechanically connected to the base unit (2), the weighing cell (3) further comprising at least one sensor (7) for measuring a force which is applied to the force application section (5) and a weighing cell board (8) for generating a weight value from the measured force, the weighing cell board (8) comprising a processor (13), a storage (15) and a threshold value storage (15), wherein the weighing cell board (8) is electrically connected to a weighing scale board (9), the weighing scale board (9) comprising a processor (14), a storage (16) and a threshold value storage (18), **characterized in that** the storage (16) of the weighing scale board (9) and/or the storage (15) of the weighing cell board (8) comprises a first storage for storing a number of zero point adjustments that are bigger than a first zero point adjustment threshold and a second storage for storing the biggest zero point adjustment value, wherein
the weighing scale (1) comprises a calculator of the weighing scale board (9) and/or a calculator of the weighing cell board (8) for calculating the zero point adjustment value at a startup of the weighing scale with an unloaded load receiver by force measurement of the unloaded load receiver and by comparing the measured force (SZP0, SZP1, SZP2, SZP3, SZP4, SZP6) to a previous startup zero point force (SZP0, SZP1, SZP2, SZP3, SZP4, SZP6) stored in a storage means (15) of the weighing cell board (8) and
for incrementing the number stored in the first storage if the absolute value of the zero point adjustment value is bigger than the first zero point adjustment threshold and for storing the absolute value of the calculated zero point adjustment value in the second storage if the absolute value of the calculated zero point adjustment value is bigger than the zero point adjustment value already stored in the second storage.

2. A weighing scale according to claim 1, **characterized in that** the calculator is further for calculating a zero point deviation value by comparing the measured force to a first calibration zero point force stored in a storage means (15, 16) of the weighing cell board (8) and the storage (16) of the weighing scale board (9) and/or the storage (15) of the weighing cell board (8) further comprises a third storage for storing the absolute value of the zero point deviation value if the absolute value of the calculated zero point deviation value is bigger than the zero point deviation value already stored in the third storage.

3. A weighing scale according to claim 1 or 2, **characterized in that** the storage (16) of the weighing scale board (9) and/or the storage (15) of the weighing cell board (8) further comprises a fourth storage for storing the time and/or zero point adjustment value of each zero point adjustment that is bigger than the first zero point adjustment threshold.

4. A weighing scale according to any one of claims 1 to 3, **characterized in that** the weighing scale board (9) and/or the weighing cell board (8) comprises a weighing cell lifetime prediction unit for generating a weighing cell lifetime index, wherein the lifetime prediction unit compares the number of zero point adjustments that are bigger than a first zero point adjustment threshold and/or the biggest zero point adjustment value and/or the time between two zero point adjustments that are bigger than a first zero point adjustment threshold and/or the zero point deviation value to a first weighing cell lifetime threshold for predicting that the weighing cell lifetime is coming to an end and to a second weighing cell lifetime threshold for indicating that the weighing cell lifetime is over.

5. A weighing scale according to any one of claims 1 to 4, **characterized in that** the weighing scale (1) comprises an input (20) for receiving a zero point resetting instruction during operation of the weighing scale (1) and the calculator is further for calculating a zero point adjustment value if the zero point resetting instruction is received by comparing the measured force to the current zero point force and for incrementing the number stored in a fifth storage if the absolute value of the zero point adjustment value is bigger than a second zero point adjustment threshold and for storing the absolute value of the calculated zero point adjustment value in a sixth storage if the absolute value of the calculated zero point adjustment value is bigger than the zero point adjustment value already stored in the sixth storage.

6. A weighing scale according to any one of claims 1 to 5, **characterized in that** the weighing scale board (9) and/or the weighing cell board (8) comprises a comparator for comparing a measured force to a static overload force threshold and for comparing the duration during which the measured force is over the static overload force threshold with a static overload time threshold and the storage (15) of the weighing cell board (8) and/or the storage (16) of the weighing scale board comprises a seventh storage for storing the number of times the measured force is bigger than the static overload force threshold for a longer duration than the static overload time threshold and a eighth storage for storing the highest measured static overload force.

7. A weighing scale according to any one of claims 1 to 6, **characterized in that** the weighing scale board (9) and/or the weighing cell board (8) comprises a comparator for comparing a measured force to a dynamic overload force threshold and the storage (15) of the weighing cell board (8) and/or the storage (16) of the weighing scale board comprises a ninth storage for storing the number of times the measured force is bigger than the dynamic overload force threshold and a tenth storage for storing the highest measured dynamic overload force.

8. A weighing scale according to any one of claims 1 to 7, **characterized in that** the weighing scale board (9) and/or the weighing cell board (8) comprises an acceleration sensor and the storage (15) of the weighing cell board (8) and/or the storage (16) of the weighing scale board comprises an eleventh storage for storing the number of times the measured acceleration is above an acceleration threshold and a twelfth storage for storing the highest measured acceleration.

9. A weighing scale according to any one of claims 1 to 8, **characterized in that** the weighing scale board (9) and/or the weighing cell board (8) comprises a temperature sensor and the storage (15) of the weighing cell board (8) and/or the storage (16) of the weighing scale board comprises a thirteenth storage for storing the number of times the measured temperature is above a temperature threshold and a fourteenth storage for storing the highest measured temperature.

10. A weighing scale according to any one of claims 1 to 9, **characterized in that** the weighing cell board (8) comprises a supply voltage measurement device and the storage (15) of the weighing cell board (8) comprises a fifteenth storage for storing the number of times the measured supply voltage is below a supply voltage threshold.

11. A weighing scale according to any one of claims 5 to 10, **characterized in that** the weighing cell lifetime prediction unit includes the values of the fifth storage and/or sixth storage and/or seventh storage and/or eighth storage and/or ninth storage and/or tenth storage the eleventh storage and/or twelfth storage and/or thirteenth storage and/or fourteenth storage and/or fifteenth storage for generating the weighing cell lifetime index.

12. A weighing scale according to any one of claims 1 to 11, **characterized in that** the weighing scale board (9) and/or the weighing cell board (8) comprise a battery for providing supply voltage to at least one of the force measurement sensor, the acceleration sensor, the temperature sensor and the storage for providing the functionality of calculating, comparing and/or storing during times the weighing scale is unplugged.

13. Method for operating a weighing scale, the weighing scale comprising a base unit, a weighing cell arranged inside the base unit, the weighing cell comprising a force application section mechanically connected to a load receiver and a ground section mechanically connected to the base unit, the weighing cell further comprising at least one sensor for measuring a force which is applied to the force application section and a weighing cell board for generating a weight value from the measured force, wherein the weighing cell board is electrically connected to a weighing scale board, comprising the steps:
- during a startup, performing a force measurement of an unloaded load receiver,
- calculating by a calculator a zero point adjustment value by comparing the measured force to a previous startup zero point force,
- if the absolute value of the zero point adjustment value is bigger than a first zero point adjustment threshold, incrementing the number of zero point adjustments stored in a first storage by one, and/or
- if the absolute value of the zero point adjustment value is bigger than the zero point adjustment value stored in a second storage, storing the absolute value of the calculated zero point adjustment value in the second storage.

14. Method for operating a weighing scale according to claim 13, further comprising the step:
- calculating a zero point deviation value by comparing the measured force to a first calibration zero point force,
- storing the absolute value of the zero point deviation value in a third storage if the absolute value of the calculated zero point deviation value is bigger than the zero point deviation value already stored in the third storage.

15. Method for operating a weighing scale according to claim 13 or 14, further comprising the step:
- performing a weighing cell lifetime prediction by generating a weighing cell lifetime index based on the values stored in the first, second and/or third storage,
- if the weighing cell lifetime index is below a first weighing cell lifetime threshold, displaying a message on a user display of the weighing scale that a service is needed and the lifetime of the weighing cell is coming to an end, and
- if the weighing cell lifetime index is below a second weighing cell lifetime threshold, displaying a message on a user display of the weighing scale that operation of the weighing scale is stopped and stopping operation of the weighing cell.

16. Method for operating a weighing scale according to one of claims 13 or 15, further comprising the step:
- if a measured force is higher than a static overload force threshold and the measured force higher than the static overload force threshold is applied for a duration longer than a static overload time threshold, incrementing an static overload index,
- if a measured force is higher than a dynamic overload force threshold, incrementing a dynamic overload index,
- if an accelerating measured by an acceleration sensor is higher than an acceleration threshold, incrementing an acceleration index,
- if a temperature measured by a temperature sensor is higher than a temperature threshold, incrementing a temperature index,
- if the supply voltage of the weighing cell board is below a supply voltage threshold, incrementing a supply voltage index, and
- performing a weighing cell lifetime prediction by generating a weighing cell lifetime index further based on at least one of the static overload index, the dynamic overload index, the acceleration index, the temperature index and the supply voltage index.

## Patentansprüche

1. Waage (1), die eine Grundeinheit (2) und eine Wägezelle (3), die in der Grundeinheit (2) angeordnet ist, umfasst, wobei die Wägezelle (3) einen Kraftausübungsabschnitt (5), der mit einer Lastaufnahme (6) mechanisch verbunden ist, und einen Bodenabschnitt (4), der mit der Grundeinheit (2) mechanisch verbunden ist, umfasst, wobei die Wägezelle (3) ferner mindestens einen Sensor (7) zum Messen einer Kraft, die auf den Kraftausübungsabschnitt (5) ausgeübt wird, und eine Wägezellenleiterplatte (8) zum Erzeugen eines Gewichtswertes aus der gemessenen Kraft umfasst, wobei die Wägezellenleiterplatte (8) einen Prozessor (13), einen Speicher (15) und einen Schwellenwertspeicher (15) umfasst, wobei die Wägezellenleiterplatte (8) mit einer Waagenleiterplatte (9) elektrisch verbunden ist, wobei die Waagenleiterplatte (9) einen Prozessor (14), einen Speicher (16) und einen Schwellenwertspeicher (18) umfasst,
**dadurch gekennzeichnet, dass** der Speicher (16) der Waagenleiterplatte (9) und/oder der Speicher (15) der Wägezellenleiterplatte (8) einen ersten Speicher zum Speichern einer Anzahl von Nullpunkteinstellungen, die größer als ein erster Nullpunkteinstellungs-Schwellenwert sind, und einen zweiten Speicher zum Speichern des größten Nullpunkteinstellungswertes umfassen, wobei die Waage (1) eine Recheneinrichtung der Waagenleiterplatte (9) und/oder eine Recheneinrichtung der Wägezellenleiterplatte (8) zum Berechnen des Nullpunkteinstellungswertes bei einer Inbetriebnahme der Waage mit einer unbelasteten Lastaufnahme durch Kraftmessung der unbelasteten Lastaufnahme und durch Vergleichen der gemessenen Kraft (SZPO, SZP1, SZP2, SZP3, SZP4, SZP6) mit einer vorhergehenden Inbetriebnahme-Nullpunktkraft (SZPO, SZP1, SZP2, SZP3, SZP4, SZP6), die in einem Speichermittel (15) der Wägezellenleiterplatte (8) gespeichert ist, und zum Inkrementieren der Anzahl, die im ersten Speicher gespeichert ist, wenn der Absolutwert des Nullpunkteinstellungswertes größer als der erste Nullpunkteinstellungs-Schwellenwert ist, und zum Speichern des Absolutwertes des berechneten Nullpunkteinstellungswertes im zweiten Speicher, wenn der Absolutwert des berechneten Nullpunkteinstellungswertes größer als der Nullpunkteinstellungswert ist, der bereits im zweiten Speicher gespeichert ist, umfasst.

2. Waage nach Anspruch 1, **dadurch gekennzeichnet, dass** die Recheneinrichtung ferner zum Berechnen eines Nullpunktabweichungswertes durch Vergleichen der gemessenen Kraft mit einer ersten Kalibrierungsnullpunktkraft, die in einem Speichermittel (15, 16) der Wägezellenleiterplatte (8) gespeichert ist, dient und der Speicher (16) der Waagenleiterplatte (9) und/oder der Speicher (15) der Wägezellenleiterplatte (8) ferner einen dritten Speicher zum Speichern des Absolutwertes des Nullpunktabweichungswertes, wenn der Absolutwert des berechneten Nullpunktabweichungswertes größer als der Nullpunktabweichungswert ist, der bereits im dritten Speicher gespeichert ist, umfassen.

3. Waage nach Anspruch 1 oder 2, **dadurch gekennzeichnet, dass** der Speicher (16) der Waagenleiterplatte (9) und/oder der Speicher (15) der Wägezellenleiterplatte (8) ferner einen vierten Speicher zum Speichern der Zeit und/oder des Nullpunkteinstellungswertes jeder Nullpunkteinstellung, die größer als der erste Nullpunkteinstellungs-Schwellenwert ist, umfassen.

4. Waage nach einem der Ansprüche 1 bis 3, **dadurch gekennzeichnet, dass** die Waagenleiterplatte (9) und/oder die Wägezellenleiterplatte (8) eine Wägezellen-Lebensdauervorhersageeinheit zum Erzeugen eines Wägezellen-Lebensdauerindex umfassen, wobei die Lebensdauervorhersageeinheit die Anzahl der Nullpunkteinstellungen, die größer als ein erster Nullpunkteinstellungs-Schwellenwert und/oder der größte Nullpunkteinstellungswert sind, und/oder die Zeit zwischen zwei Nullpunkteinstellungen, die größer als ein erster Nullpunkteinstellungs-Schwellenwert und/oder der Nullpunktabweichungswert sind, mit einem ersten Wägezellen-Lebensdauerschwellenwert zum Vorhersagen, dass die Wägezellenlebensdauer sich dem Ende nähert, und mit einem zweiten Wägezellen-Lebensdauerschwellenwert zum Angeben, dass die Wägezellenlebensdauer abgelaufen ist, vergleicht.

5. Waage nach einem der Ansprüche 1 bis 4, **dadurch gekennzeichnet, dass** die Waage (1) einen Eingang (20) zum Empfangen einer Nullpunktrückstellanweisung während des Betriebs der Waage (1) umfasst und die Recheneinrichtung ferner zum Berechnen eines Nullpunkteinstellungswertes, wenn die Nullpunktrückstellanweisung empfangen wird, durch Vergleichen der gemessenen Kraft mit der aktuellen Nullpunktkraft und zum Inkrementieren der Anzahl, die in einem fünften Speicher gespeichert ist, wenn der Absolutwert des Nullpunkteinstellungswertes größer als ein zweiter Nullpunkteinstellungs-Schwellenwert ist, und zum Speichern des Absolutwertes des berechneten Nullpunkteinstellungswertes in einem sechsten Speicher, wenn der Absolutwert des berechneten Nullpunkteinstellungswertes größer als der Nullpunkteinstellungswert ist, der bereits im sechsten Speicher gespeichert ist, dient.

6. Waage nach einem der Ansprüche 1 bis 5, **dadurch gekennzeichnet, dass** die Waagenleiterplatte (9) und/oder die Wägezellenleiterplatte (8) einen Komparator zum Vergleichen einer gemessenen Kraft mit einem Schwellenwert für eine statische Überlastkraft und zum Vergleichen der Zeitspanne, während der die gemessene Kraft über dem Schwellenwert für eine statische Überlastkraft liegt, mit einem Schwellenwert für eine statische Überlastzeit umfassen und der Speicher (15) der Wägezellenleiterplatte (8) und/oder der Speicher (16) der Waagenleiterplatte einen siebten Speicher zum Speichern der Anzahl der Wiederholungen, für die die gemessene Kraft für eine längere Zeitspanne als der Schwellenwert für eine statische Überlastzeit größer als der Schwellenwert für eine statische Überlastkraft ist, und einen achten Speicher zum Speichern der höchsten, gemessenen statischen Überlastkraft umfassen.

7. Waage nach einem der Ansprüche 1 bis 6, **dadurch gekennzeichnet, dass** die Waagenleiterplatte (9) und/oder die Wägezellenleiterplatte (8) einen Komparator zum Vergleichen einer gemessenen Kraft mit einem Schwellenwert für eine dynamische Überlastkraft umfassen und der Speicher (15) der Wägezellenleiterplatte (8) und/oder der Speicher (16) der Waagenleiterplatte einen neunten Speicher zum Speichern der Anzahl der Wiederholungen, für die die gemessene Kraft größer als der Schwellenwert für eine dynamische Überlastkraft ist, und einen zehnten Speicher zum Speichern der höchsten, gemessenen dynamischen Überlastkraft umfassen.

8. Waage nach einem der Ansprüche 1 bis 7, **dadurch gekennzeichnet, dass** die Waagenleiterplatte (9) und/oder die Wägezellenleiterplatte (8) einen Beschleunigungssensor umfassen und der Speicher (15) der Wägezellenleiterplatte (8) und/oder der Speicher (16) der Waagenleiterplatte einen elften Speicher zum Speichern der Anzahl der Wiederholungen, für die die gemessene Beschleunigung über einem Beschleunigungsschwellenwert liegt, und einen zwölften Speicher zum Speichern der höchsten, gemessenen Beschleunigung umfassen.

9. Waage nach einem der Ansprüche 1 bis 8, **dadurch gekennzeichnet, dass** die Waagenleiterplatte (9) und/oder die Wägezellenleiterplatte (8) einen Temperatursensor umfassen und der Speicher (15) der Wägezellenleiterplatte (8) und/oder der Speicher (16) der Waagenleiterplatte einen dreizehnten Speicher zum Speichern der Anzahl der Wiederholungen, für die die gemessene Temperatur über einem Temperaturschwellenwert liegt, und einen vierzehnten Speicher zum Speichern der höchsten, gemessenen Temperatur umfassen.

10. Waage nach einem der Ansprüche 1 bis 9, **dadurch gekennzeichnet, dass** die Wägezellenleiterplatte (8) eine Versorgungsspannungs-Messvorrichtung umfasst und der Speicher (15) der Wägezellenleiterplatte (8) einen fünfzehnten Speicher zum Speichern der Anzahl der Wiederholungen, für die die gemessene Versorgungsspannung unter einem VersorgungsspannungsSchwellenwert liegt, umfasst.

11. Waage nach einem der Ansprüche 5 bis 10, **dadurch gekennzeichnet, dass** die Wägezellen-Lebensdauervorhersageeinheit die Werte des fünften Speichers und/oder des sechsten Speichers und/oder des siebten Speichers und/oder des achten Speichers und/oder des neunten Speichers und/oder des zehnten Speichers und/oder des elften Speichers und/oder des zwölften Speichers und/oder des dreizehnten Speichers und/oder des vierzehnten Speichers und/oder des fünfzehnten Speichers zum Erzeugen des Wägezellen-Lebensdauerindex enthält.

12. Waage nach einem der Ansprüche 1 bis 11, **dadurch gekennzeichnet, dass** die Waagenleiterplatte (9) und/oder die Wägezellenleiterplatte (8) eine Batterie zum Bereitstellen einer Versorgungsspannung für den Kraftmesssensor und/oder den Beschleunigungssensor und/oder den Temperatursensor und/oder den Speicher zum Bereitstellen der Funktionalität des Berechnens, Vergleichens und/oder Speicherns während Zeiten, in denen die Waage ausgesteckt ist, umfassen.

13. Verfahren zum Betreiben einer Waage, wobei die Waage eine Grundeinheit und eine Wägezelle, die im Inneren der Grundeinheit angeordnet ist, umfasst, wobei die Wägezelle einen Kraftausübungsabschnitt, der mit einer Lastaufnahme mechanisch verbunden ist, und einen Bodenabschnitt, der mit der Grundeinheit mechanisch verbunden ist, umfasst, wobei die Wägezelle ferner mindestens einen Sensor zum Messen einer Kraft, die auf den Kraftausübungsabschnitt ausgeübt wird, und eine Wägezellenleiterplatte zum Erzeugen eines Gewichtswertes aus der gemessenen Kraft umfasst, wobei die Wägezellenleiterplatte mit einer Waagenleiterplatte elektrisch verbunden ist, das die folgenden Schritte umfasst:
- während einer Inbetriebnahme Durchführen einer Kraftmessung einer unbelasteten Lastaufnahme,
- Berechnen eines Nullpunkteinstellungswertes durch eine Recheneinrichtung durch Vergleichen der gemessenen Kraft mit einer vorhergehenden Inbetriebnahme-Nullpunktkraft,
- dann, wenn der Absolutwert des Nullpunkteinstellungswertes größer als ein erster Nullpunkteinstellungs-Schwellenwert ist, Inkrementieren der Anzahl von Nullpunkteinstellungen, die in einem ersten Speicher gespeichert ist, um eins, und/oder
- dann, wenn der Absolutwert des Nullpunkteinstellungswertes größer als der Nullpunkteinstellungswert ist, der in einem zweiten Speicher gespeichert ist, Speichern des Absolutwertes des berechneten Nullpunkteinstellungswertes im zweiten Speicher.

14. Verfahren zum Betreiben einer Waage nach Anspruch 13, das ferner den folgenden Schritt umfasst:
- Berechnen eines Nullpunktabweichungswertes durch Vergleichen der gemessenen Kraft mit einer ersten Kalibrierungsnullpunktkraft,
- Speichern des Absolutwertes des Nullpunktabweichungswertes in einem dritten Speicher, wenn der Absolutwert des berechneten Nullpunktabweichungswertes größer als der Nullpunktabweichungswert ist, der bereits im dritten Speicher gespeichert ist.

15. Verfahren zum Betreiben einer Waage nach Anspruch 13 oder 14, das ferner den folgenden Schritt umfasst:
- Durchführen einer Wägezellen-Lebensdauervorhersage durch Erzeugen eines Wägezellen-Lebensdauerindex auf der Grundlage der Werte, die im ersten, zweiten und/oder dritten Speicher gespeichert sind,
- dann, wenn der Wägezellen-Lebensdauerindex unter einem ersten Wägezellen-Lebensdauerschwellenwert liegt, Anzeigen einer Nachricht auf einer Anwenderanzeige der Waage, dass eine Wartung benötigt wird und die Lebensdauer der Wägezelle sich einem Ende nähert, und
- dann, wenn der Wägezellen-Lebensdauerindex unter einem zweiten Wägezellen-Lebensdauerschwellenwert liegt, Anzeigen einer Nachricht auf einer Anwenderanzeige der Waage, dass der Betrieb der Waage angehalten wird, und Anhalten des Betriebs der Wägezelle.

16. Verfahren zum Betreiben einer Waage nach einem der Ansprüche 13 oder 15, das ferner den folgenden Schritt umfasst:
- dann, wenn eine gemessene Kraft höher als ein Schwellenwert für eine statische Überlastkraft ist und die gemessene Kraft, die höher als der Schwellenwert für eine statische Überlastkraft ist, für eine Zeitspanne, die länger als ein Schwellenwert für eine statische Überlastzeit ist, angelegt wird, Inkrementieren eines Index für eine statische Überlast,
- dann, wenn eine gemessene Kraft höher als ein Schwellenwert für eine dynamische Überlastkraft ist, Inkrementieren eines Index für eine dynamische Überlast,
- dann, wenn eine Beschleunigung, die durch einen Beschleunigungssensor gemessen wird, höher als ein Beschleunigungsschwellenwert ist, Inkrementieren eines Beschleunigungsindex,
- dann, wenn eine Temperatur, die durch einen Temperatursensor gemessen wird, höher als ein Temperaturschwellenwert ist, Inkrementieren eines Temperaturindex,
- dann, wenn die Versorgungsspannung der Wägezellenleiterplatte unter einem Versorgungsspannungsschwellenwert liegt, Inkrementieren eines Versorgungsspannungsindex, und
- Durchführen einer Wägezellen-Lebensdauervorhersage durch Erzeugen eines Wägezellen-Lebensdauerindex ferner auf der Grundlage des Index für eine statische Überlast und/oder des Index für eine dynamische Überlast und/oder des Beschleunigungsindex und/oder des Temperaturindex und/oder des Versorgungsspannungsindex.

## Revendications

1. Balance (1), comprenant une unité de base (2), une cellule de pesage (3) disposée à l'intérieur de l'unité de base (2), la cellule de pesage (3) comprenant une section d'application de force (5) reliée mécaniquement à un récepteur de charge (6) et une section de terre (4) reliée mécaniquement à l'unité de base (2), la cellule de pesage (3) comprenant en outre au moins un capteur (7) pour mesurer une force qui est appliquée à la section d'application de force (5) et une carte de cellule de pesage (8) pour générer une valeur de poids à partir de la force mesurée, la carte de cellule de pesage (8) comprenant un processeur (13), une mémoire (15) et une mémoire de valeur seuil (15), dans laquelle la carte de cellule de pesage (8) est connectée électriquement à une carte de balance (9), la carte de balance (9) comprenant un processeur (14), une mémoire (16) et une mémoire de valeur seuil (18), **caractérisée en ce que** la mémoire (16) de la carte de balance (9) et/ou la mémoire (15) de la carte de cellule de pesage (8) comprend une première mémoire pour stocker un nombre de tarages à zéro qui est supérieur à un premier seuil de tarage à zéro et une deuxième mémoire pour stocker la plus grande valeur de tarage à zéro, dans laquelle la balance (1) comprend un calculateur de la carte de balance (9) et/ou un calculateur de la carte de cellule de pesage (8) pour calculer la valeur de tarage à zéro au démarrage de la balance avec un récepteur de charge non chargé par mesure de la force au moyen du récepteur de charge non chargé et par comparaison de la force mesurée (SZPO, SZP1, SZP2, SZP3, SZP4, SZP6) à une force à zéro de démarrage précédente (SZPO, SZP1, SZP2, SZP3, SZP4, SZP6) stockée dans un moyen de stockage (15) de la carte de cellule de pesage (8) et pour incrémenter le nombre stocké dans la première mémoire si la valeur absolue de la valeur de tarage à zéro est supérieure au premier seuil de tarage et pour stocker la valeur absolue de la valeur de tarage à zéro calculée dans la deuxième mémoire si la valeur absolue de la valeur de tarage à zéro est supérieure à la valeur de tarage à zéro déjà stockée dans la deuxième mémoire.

2. Balance selon la revendication 1, **caractérisée en ce que** le calculateur est en outre destiné à calculer une valeur d'écart à zéro par comparaison de la force mesurée à une première force à zéro d'étalonnage dans un moyen de stockage (15, 16) de la carte de cellule de pesage (8) et la mémoire (16) de la carte de balance (9) et/ou la mémoire (15) de la carte de cellule de pesage (8) comprend en outre une troisième mémoire pour stocker la valeur absolue de la valeur d'écart à zéro si la valeur absolue de la valeur d'écart à zéro calculée est supérieure à la valeur d'écart à zéro déjà stockée dans la troisième mémoire.

3. Balance selon la revendication 1 ou 2, **caractérisée en ce que** la mémoire (16) de la carte de balance (9) et/ou la mémoire (15) de la carte de cellule de pesage (8) comprend en outre une quatrième mémoire pour stocker le temps et/ou la valeur de tarage à zéro de chaque tarage à zéro qui est supérieur au premier seuil de tarage à zéro.

4. Balance selon l'une quelconque des revendications 1 à 3, **caractérisée en ce que** la carte de balance (9) et/ou la carte de cellule de pesage (8) comprend une unité de prédiction de durée de vie de la cellule de pesage pour générer un indice de durée de vie de la cellule de pesage, dans laquelle l'unité de prédiction de durée de vie compare le nombre de tarages à zéro qui sont supérieurs à un premier seuil de tarage à zéro et/ou à la plus grande valeur de tarage à zéro et/ou le temps entre deux tarages à zéro qui sont supérieurs à un premier seuil de tarage à zéro et/ou à la valeur d'écart à zéro à un premier seuil de durée de vie de cellule de pesage pour prédire que la durée de vie de la cellule de pesage arrive à son terme et à un second seuil de durée de vie de cellule de pesage pour indiquer que la durée de vie de la cellule de pesage est terminée.

5. Balance selon l'une quelconque des revendications 1 à 4, **caractérisée en ce que** la balance (1) comprend une entrée (20) pour recevoir une instruction de réinitialisation à zéro pendant le fonctionnement de la balance (1) et le calculateur est en outre destiné à calculer une valeur de tarage à zéro si l'instruction de réinitialisation à zéro est reçue par la comparaison de la force mesurée à la force à zéro courante et à incrémenter le nombre stocké dans une cinquième mémoire si la valeur absolue de la valeur de tarage à zéro est supérieure à un second seuil de tarage à zéro et pour stocker la valeur absolue de la valeur de tarage à zéro calculée dans une sixième mémoire si la valeur absolue de la valeur de tarage à zéro calculée est supérieure à la valeur de tarage à zéro stockée dans la sixième mémoire.

6. Balance selon l'une quelconque des revendications 1 à 5, **caractérisée en ce que** la carte de balance (9) et/ou la carte de cellule de pesage (8) comprend un comparateur pour comparer une force mesurée à un seuil de force de surcharge statique et pour comparer la durée pendant laquelle la force mesurée est supérieure au seuil de force de surcharge statique à un seuil de temps de surcharge statique et la mémoire (15) de la carte de cellule de pesage (8) et/ou la mémoire (16) de la carte de balance comprend une septième mémoire pour stocker le nombre de fois où la force mesurée est supérieure au seuil de force de surcharge statique pendant une durée plus longue que le seuil de temps de surcharge statique et une huitième mémoire pour stocker la plus grande force de surcharge statique mesurée.

7. Balance selon l'une quelconque des revendications 1 à 6, **caractérisée en ce que** la carte de balance (9) et/ou la carte de cellule de pesage (8) comprend un comparateur pour comparer une force mesurée à un seuil de force de surcharge dynamique et la mémoire (15) de la carte de cellule de pesage (8) et/ou la mémoire (16) de la carte de balance comprend une neuvième mémoire pour stocker le nombre de fois où la force mesurée est supérieure au seuil de force de surcharge dynamique et une dixième mémoire pour stocker la plus grande force de surcharge dynamique mesurée.

8. Balance selon l'une quelconque des revendications 1 à 7, **caractérisée en ce que** la carte de balance (9) et/ou la carte de cellule de pesage (8) comprend un capteur d'accélération et la mémoire (15) de la carte de cellule de pesage (8) et/ou la mémoire (16) de la carte de balance comprend une onzième mémoire pour stocker le nombre de fois où l'accélération mesurée est supérieure à un seuil d'accélération et une douzième mémoire pour stocker la plus grande accélération mesurée.

9. Balance selon l'une quelconque des revendications 1 à 8, **caractérisée en ce que** la carte de balance (9) et/ou la carte de cellule de pesage (8) comprend un capteur de température et la mémoire (15) de la carte de cellule de pesage (8) et/ou la mémoire (16) de la carte de balance comprend une treizième mémoire pour stocker le nombre de fois où la température mesurée est supérieure à un seuil de température et une quatorzième mémoire pour stocker la plus grande température mesurée.

10. Balance selon l'une quelconque des revendications 1 à 9, **caractérisée en ce que** la carte de cellule de pesage (8) comprend un dispositif de mesure de tension d'alimentation et la mémoire (15) de la carte de cellule de pesage (8) comprend une quinzième mémoire pour stocker le nombre de fois où la tension d'alimentation mesurée est inférieure à un seuil de tension d'alimentation.

11. Balance selon l'une quelconque des revendications 5 à 10, **caractérisée en ce que** l'unité de prédiction de durée de vie de la cellule de pesage comprend les valeurs de la cinquième mémoire et/ou de la sixième mémoire et/ou de la septième mémoire et/ou de la huitième mémoire et/ou de la neuvième mémoire et/ou de la dixième mémoire et/ou de la onzième mémoire et/ou de la douzième mémoire et/ou de la treizième mémoire et/ou de la quatorzième mémoire et/ou de la quinzième mémoire pour générer l'indice de durée de vie de la cellule de pesage.

12. Balance selon l'une quelconque des revendications 1 à 11, **caractérisée en ce que** la carte de balance (9) et/ou la carte de cellule de pesage (8) comprend une batterie pour alimenter en tension au moins l'un du capteur de mesure de force, du capteur d'accélération, du capteur de température et de la mémoire pour produire la fonctionnalité de calcul, de comparaison et/ou de stockage pendant les moments où la balance est débranchée.

13. Procédé de fonctionnement d'une balance, la balance comprenant une unité de base, une cellule de pesage disposée à l'intérieur de l'unité de base, la cellule de pesage comprenant une section d'application de force reliée mécaniquement à un récepteur de charge et une section de terre reliée mécaniquement à l'unité de base, la cellule de pesage comprenant en outre au moins un capteur pour mesurer une force qui est appliquée à la section d'application de force et une carte de cellule de pesage pour générer une valeur de poids à partir de la force mesurée, dans lequel la carte de cellule de pesage est connectée électriquement à une carte de balance, comprenant les étapes suivantes :
pendant un démarrage, l'exécution d'une mesure de force d'un récepteur de charge non chargé,
le calcul par un calculateur d'une valeur de tarage à zéro par la comparaison de la force mesurée à une force à zéro de démarrage précédente,
si la valeur absolue de la valeur de tarage à zéro est supérieure à un premier seuil de tarage, l'incrémentation de un du nombre de tarages à zéro stockés dans une première mémoire, et/ou
si la valeur absolue de la valeur de tarage à zéro est supérieure à la valeur de tarage à zéro stockée dans une deuxième mémoire, le stockage de la valeur absolue de la valeur de tarage à zéro calculée dans la deuxième mémoire.

14. Procédé de fonctionnement d'une balance selon la revendication 13, comprenant en outre l'étape suivante :
le calcul d'une valeur d'écart à zéro par la comparaison de la force mesurée à une première force à zéro d'étalonnage,
le stockage de la valeur absolue de la valeur d'écart à zéro dans une troisième mémoire si la valeur absolue de la valeur d'écart à zéro calculée est supérieure à la valeur d'écart à zéro déjà stockée dans la troisième mémoire.

15. Procédé de fonctionnement d'une balance selon la revendication 13 ou 14, comprenant en outre l'étape suivante :
l'exécution d'une prédiction de durée de vie de la cellule de pesage par la génération d'un indice de durée de vie de la cellule de pesage sur la base des valeurs stockées dans les première, deuxième et/ou troisième mémoires,
si l'indice de durée de vie de la cellule de pesage est inférieur à un premier seuil de durée de vie de cellule de pesage, l'affichage d'un message sur un écran d'utilisateur de la balance du fait qu'un service est requis et que la durée de vie de la cellule de pesage arrive à son terme, et
si l'indice de durée de vie de la cellule de pesage est inférieur à un second seuil de durée de vie de cellule de pesage, l'affichage d'un message sur un écran d'utilisateur de la balance du fait qu'un fonctionnement de la balance est arrêté et l'arrêt du fonctionnement de la cellule de pesage.

16. Procédé de fonctionnement d'une balance selon l'une quelconque des revendications 13 ou 15, comprenant en outre les étapes suivantes :
si une force mesurée est supérieure à un seuil de force de surcharge statique et si la force mesurée supérieure au seuil de force de surcharge statique est appliquée pendant une durée supérieure à un seuil de temps de surcharge statique, l'incrémentation d'un indice de surcharge statique,
si une force mesurée est supérieure à un seuil de force de surcharge dynamique, l'incrémentation d'un indice de surcharge dynamique,
si une accélération mesurée par un capteur d'accélération est supérieure à un seuil d'accélération, l'incrémentation d'un indice d'accélération,
si une température mesurée par un capteur de température est supérieure à un seuil de température, l'incrémentation d'un indice de température,
si la tension d'alimentation de la carte de cellule de pesage est inférieure à un seuil de tension d'alimentation, l'incrémentation d'un indice de tension d'alimentation, et
l'exécution d'une prédiction de durée de vie de la cellule de pesage par la génération d'un indice de durée de vie de la cellule de pesage étant en outre basée sur au moins l'un de l'indice de surcharge statique, de l'indice de surcharge dynamique, de l'indice d'accélération, de l'indice de température et de l'indice de tension d'alimentation.
